# EUROPEAN PATENT APPLICATION

(11) **EP 4 391 549 A1**
(43) Date of publication of application: **26.06.2024**
(21) Application number: 22889724.5
(22) Date of filing: 06.10.2022
(51) Int. Cl.: H04N 21/218, H04N 21/6377

(54) **SERVER DEVICE, DELIVERY SYSTEM, AND CONTROL METHOD THEREOF**

(30) Priority: 02.11.2021 JP 2021179431
(71) Applicant: Avatarin Inc., Tokyo 103-0022 (JP)
(72) Inventor: FUKABORI, Akira, Tokyo 103-0022 (JP); KAJITANI, Kevin, Tokyo 103-0022 (JP); FERNANDO, Charith Lasantha, Tokyo 103-0022 (JP); TSUTSU, Masahiro, Tokyo 103-0022 (JP)
(74) Representative: D Young & Co LLP
(86) International application number: PCT/JP2022/037472
(87) International publication number: WO 2023/079901

(57) **Abstract**

There is provided a technique for controlling image data distribution making use of a robot. A robot 30 transmits distribution image date acquired by a first camera C1 and personal image data acquired by a second camera C2 to a management server 10 (S1, S2). When receiving the distribution image data from the robot 30, the management server 10 stores the distribution image data in a distribution image database DB1 and live-streams the distribution image data to a terminal 20 of each user (S3). When receiving the personal image data from the robot 30, the management server 10 stores the personal image data in a personal image database DB2 and transmits the personal image data only to a terminal 20 of a specific user who has given a corresponding image-capturing instruction (S4).

## Description

### Cross-reference to Related Application

This application is based on Japanese Patent Application No. 2021-179431 filed on November 2, 2021, the disclosure of which is incorporated herein by reference.

### Technical Field

The present invention relates to a server apparatus, a distribution system, and a distribution system control method.

### Background Art

In recent years, video conferencing systems using the Internet have become widespread, and there are known robots (for example, telepresence robots) that allow users in remote locations not only to speak while looking at each other's faces but also to manipulate the orientation and position of a camera (refer to Patent Document 1).

Robots are expected to be utilized in various fields. For example, if a robot is installed in a facility such as an art museum, a museum, or an aquarium, and a user living in a remote location remotely operates a robot so as to use the robot as a substitute for the user, the user can admire various exhibits as if the user were actually in the facility.

### Citation List

### Patent Document

Patent Document 1: Patent Publication JP-A-2019-062308

### Summary

Incidentally, with recent functional improvements of electronic devices, realtime distribution of moving image data (so-called live streaming), as in a live broadcast on television, by using a smartphone or the like has been attracting attention.

By applying such a live-streaming function to a robot, it is conceivable that, for example, an operator who operates the robot installed in a facility acquires data (hereinafter, collectively referred to as image data) such as video, image, and audio data in the facility by using a camera mounted on the robot. The acquired image data may be live streamed to viewers, or the operator or the like may appropriately edit the image data later and create original content. However, a technique adopting such concepts has not yet been proposed.

The present invention has been made in view of the circumstances described above, and an object of the present invention is to provide a technique for controlling image data distribution using a robot.

**A** distribution system according to an aspect of the present disclosure includes: a robot that operates based on operation information received via a communication network; and a server apparatus that controls an operation of the robot, wherein the robot includes: an imaging unit that includes a first camera which acquires distribution image data in accordance with a first image-capturing instruction from an operator and a second camera which acquires personal image data in accordance with a second image-capturing instruction from a user, who is the operator or a viewer; and a transmission unit that transmits the distribution image data and the personal image data to the server apparatus, and the server apparatus includes: a distribution unit that distributes the distribution image data to a terminal of the user; and a transmission unit that transmits the personal image data to the terminal of the user who gives the second image-capturing instruction.

### Advantageous Effects of Invention

According to the present invention, there is provided a technique for controlling image data distribution using a robot.

### Brief Description of Drawings

Fig. 1 is a diagram illustrating a network configuration of a distribution system according to an embodiment.
Fig. 2 is an image diagram illustrating an overview of the distribution system.
Fig. 3 is a diagram illustrating an example of a live screen.
Fig. 4 is a block diagram illustrating a functional configuration of a management server.
Fig. 5 is a block diagram illustrating a functional configuration of a robot.
Fig. 6 is a diagram illustrating a hardware configuration of a computer mounted on each of a management server, an operator terminal, and a viewer terminal.
Fig. 7 is a diagram illustrating a hardware configuration of a computer mounted on the robot.
Fig. 8 is a flowchart illustrating an example of a process performed by the management server.
Fig. 9 is a diagram illustrating an example of a transmission destination setting screen according to Modification 1.
Fig. 10 is a diagram illustrating an example of an image-capturing restriction setting screen according to Modification 2.
Fig. 11 is a diagram illustrating an example of a live screen according to Modification 3.

### Description of Embodiments

Hereinafter, an embodiment of the present invention will be described. The following embodiment is an example for describing the present invention, and the present invention is not limited thereto. Various modifications can be made without departing from the gist of the present invention. Further, those skilled in the art can adopt embodiments in which the elements described below are replaced with equivalent elements, and such embodiments are also included in the scope of the present invention. In the following description, for ease of understanding, an embodiment in which the present invention is implemented by using an information processing apparatus (or a computer) will be described as an example. However, the present invention is not limited thereto.

### A. Embodiment

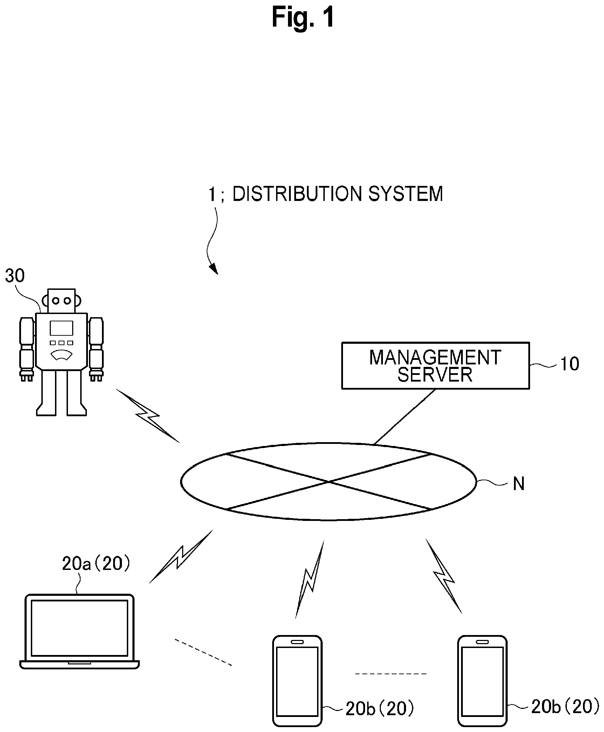

Fig. 1 illustrates a network configuration of a distribution system 1 according to the present embodiment. The distribution system 1 includes a non-stationary robot 30, an operator terminal 20a that can operate the robot 30, a management server 10 that performs live streaming of image data acquired by the robot 30, and viewer terminals 20b that can each receive and view the live-streamed image data. The robot 30, the operator terminal 20a, the viewer terminals 20b, and the management server 10 are capable of communicating with each other via a communication network N. Although Fig. 1 illustrates one robot 30, one operator terminal 20a, two viewer terminals 20b, and one management server 10, the distribution system 1 may include any respective numbers of robots 30, operator terminals 20a, viewer terminals 20b, and management servers 10. In the following description, when there is no need to distinguish between an operator and a viewer, an operator and a viewer are referred to as "user", and an operator terminal 20a and a viewer terminal 20b are referred to as "terminals 20 of users".

One or more portions of the communication network N may be a wired network or a wireless network. As an example and not limitation, the communication network N may be an Ad Hoc Network, an intranet, an extranet, a Virtual Private Network (VPN), a Local Area Network (LAN), a Wireless LAN (WLAN), a Wide Area Network (WAN), a Wireless WAN (WWAN), a Metropolitan Area Network (MAN), a part of the Internet, a part of a Public Switched Telephone Network (PSTN), a mobile telephone network, Integrated Service Digital Networks (ISDNs), wireless LANs, Long Term Evolution (LTE), Code Division Multiple Access (CDMA), near-field wireless communications such as Bluetooth (registered trademark), satellite communications, etc., or a combination of two or more thereof.

### <Overview of Distribution System 1>

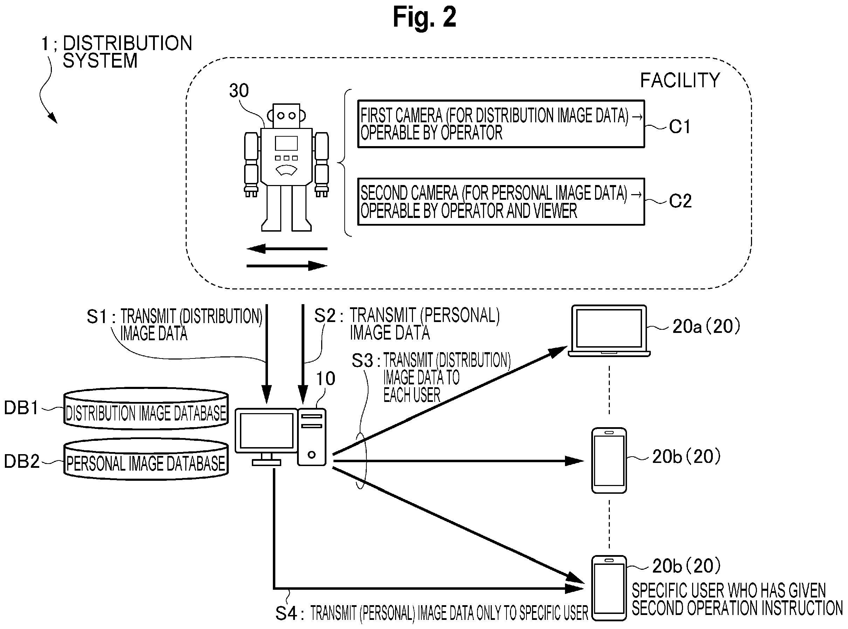

Fig. 2 is an image diagram illustrating an overview of the distribution system 1.

The robot 30 is installed in a facility such as an aquarium. The robot 30 is equipped with a first camera C1 for acquiring distribution image data, a second camera C2 for acquiring personal image data, etc. The first camera C1 can be operated by an operator having operation authority of the robot 30. The second camera C2 can be operated not only by the operator but also by a viewer viewing the live-streamed image data. While the present embodiment assumes that the second camera C2 has a higher resolution and higher functionality than the first camera C1, the present invention is not limited thereto. Hereinafter, an instruction by which the operator acquires distribution image data is referred to as "first operation instruction", and an instruction by which an individual user acquires personal image data is referred to as "second operation instruction".

**The** robot 30 transmits the distribution image date acquired by the first camera C1 and the personal image data acquired by the second camera C2 to the management server 10 (S1, S2).

When receiving the distribution image data from the robot 30, the management server 10 stores the distribution image data in a distribution image database DB1 and live-streams the distribution image data to the terminal 20 of each user (S3).

When receiving the personal image data from the robot 30, the management server 10 stores the personal image data in a personal image database DB2 and transmits the personal image data only to the terminal 20 of the specific user who has given a corresponding image-capturing instruction (that is, the second operation instruction) (S4).

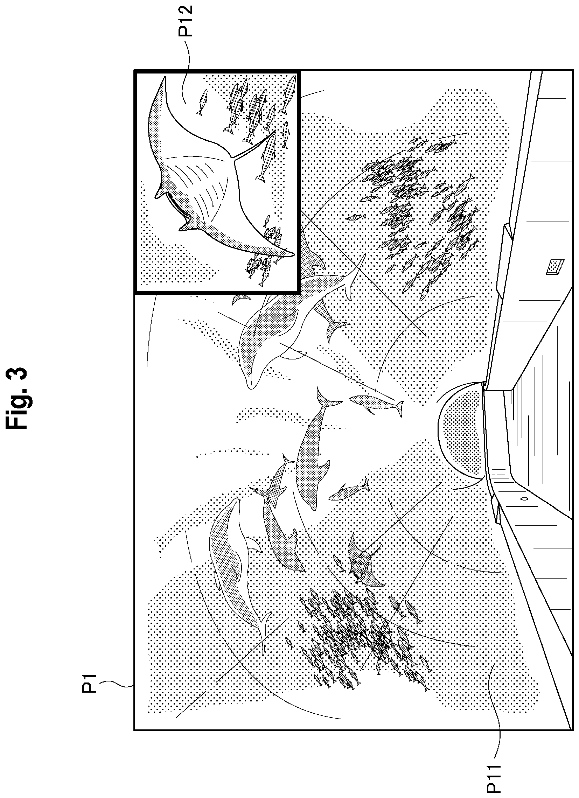

Fig. 3 is a diagram illustrating a live screen P1 displayed on the terminal 20 of the user who has given the second operation instruction.

The live screen P1 displays not only a live image P11 based on the distribution image data acquired by the first camera C1 of the robot 30 but also a pinpoint image P12 based on the personal image data acquired by the second camera C2 of the robot 30 in response to the image-capturing instruction given by the user. In this example, an enlarged image of the creature of interest to the user is displayed as the pinpoint image P12.

**As** described above, according to the present embodiment, the live image P11 based on the distribution image data is displayed on the terminal 20 of each user, and the pinpoint image P12 based on the personal image data is displayed when the individual user has given an image-capturing instruction. In this way, the users can enjoy live experiences that offer the users a sense of being present as if the users were actually in the facility by viewing these images. Hereinafter, configurations of the management server 10, the operator terminal 20a, the viewer terminal 20b, and the robot 30 will be described.

### <Configurations>

The management server 10 is constituted by an information processing apparatus such as a server computer and has a function of controlling the operation of the robot 30, a function of live-streaming the distribution image data acquired by the robot 30 to the terminal 20 of each user, and a function of transmitting, when personal image data is acquired by the robot 30, the personal image data to the terminal 20 of the specific user who has given a corresponding image-capturing instruction. The management server 10 may be constituted by a single information processing apparatus or may be constituted by a plurality of information processing apparatuses such as cloud computing and edge computing. The detailed functions of the management server 10 will be described below.

The operator terminal 20a is an information processing apparatus used by the operator for the operation of the robot 30, etc. The operator terminal 20a includes an input unit that receives an input of operation information from the operator, a display unit that displays the image data acquired by the robot 30, and a communication unit that transmits and receives various kinds of data to and from the management server 10 and the robot 30 via the communication network N.

The operator terminal 20a is, for example, a smartphone, a tablet terminal, a personal digital assistant (PDA), a personal computer, a head-mounted display, or a general-purpose or dedicated information processing apparatus such as an operation system for a specific purpose. The operator terminal 20a may be constituted by an information processing apparatus dedicated to the operation of the robot 30. In order to remotely operate the robot 30, a virtual reality (VR) apparatus, a tactile glove, or the like may also be used as the operator terminal 20a.

The viewer terminal 20b is an information processing apparatus used by the viewer, and the viewer can view image data acquired by the robot 30 thereon. The viewer terminal 20b is, for example, a smartphone, a tablet terminal, a personal digital assistant (PDA), a personal computer, a head-mounted display, or a general-purpose or dedicated information processing apparatus such as an operation system for a specific purpose.

**The** robot 30 may be constituted by, for example, a telepresence robot or an avatar robot and may include a mobile unit such as wheels. The robot 30 includes an image/sound input unit including a camera, a microphone, and the like, a driving unit that can be remotely operated by the operator terminal 20a, and a communication unit that transmits and receives various kinds of data to and from the management server 10, the operator terminal 20a, and the viewer terminal 20b via the communication network N. The robot 30 is installed in various places. For example, one or more robots 30 are installed in a facility such as an aquarium. The robot 30 is a non-stationary robot, and the term "non-stationary" includes a case where the robot 30 is a mobile robot that has a driving unit for moving such as wheels and a case where the robot 30 is a wearable robot that can be worn by a person and has a driving unit for operating a manipulator or the like.

A mobile robot is disclosed in, for example, Patent Document 1. Examples of a mobility unit of the mobile robot include a unit that travels by one wheel, two wheels, or multiple wheels, a unit that travels by a caterpillar, a unit that travels on a rail, a unit that jumps and moves, a unit that walks on two feet, four feet, or multiple feet, a unit that navigates on or in water with a screw, and a unit that flies with a propeller or the like. An example of the wearable robot is described in MHD Yamen Saraiji, Tomoya Sasaki, Reo Matsumura, Kouta Minamizawa and Masahiko Inami, "Fusion: full body surrogacy for collaborative communication," Proceeding SIGGRAPH '18 ACM SIGGRAPH 2018 Emerging Technologies Article No. 7. Further, examples of the robot 30 include a vehicle and a heavy machine that are capable of automatic traveling or semi-automatic traveling, a drone, and an airplane. The robot 30 includes a robot that is installed in a sports stadium or the like and includes a camera movable on a rail. The robot 30 also includes a satellite-type robot that is launched into outer space and that is capable of controlling its posture and the direction of image-capturing by a camera. The above-described robots 30 may be equipped with a robotic hand or a robotic arm that can grip or suck an object.

The robot 30 operates based on a command from the operator terminal 20a that has succeeded in user authentication. The user authentication may be performed by a known method, and information for the user authentication may be registered in advance.

### (Functional Configuration of Management Server 10)

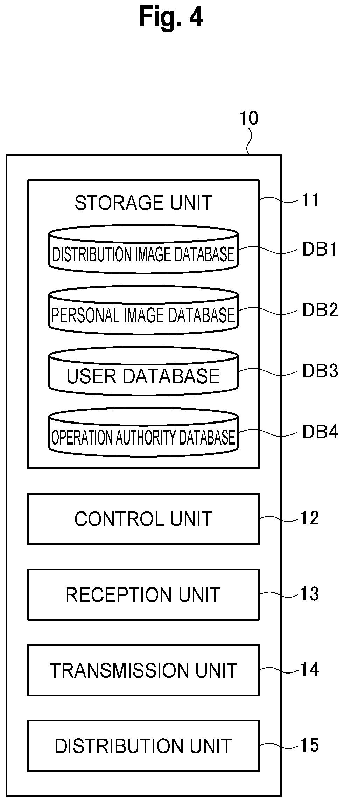

Fig. 4 is a block diagram illustrating a functional configuration of the management server (server apparatus) 10.

The management server 10 includes a storage unit 11, a control unit 12, a reception unit 13, a transmission unit 14, and a distribution unit 15 as main functional components. The functions of the management server 10 are realized by a processor of the management server 10 executing programs and the like stored in the storage unit 11.

In addition to the distribution image database DB1 and the personal image database DB2, the storage unit 11 includes a user database DB3, an operation authority database DB4, and the like.

The distribution image database DB1 stores distribution image data acquired by the first camera C1 of the robot 30. The distribution image data includes date and time information and location information indicating the date and time and the location of acquisition of the image data, a robot ID for identifying the robot 30, and the like.

The personal image database DB2 stores personal image data acquired by the second camera C2 of the robot 30. The personal image data includes, for example, a user ID for identifying a specific user (for example, an operator A and a viewer B) who has given an instruction to capture a personal image, in addition to date and time information and location information indicating the date and time and the location of acquisition of the image data and a robot ID for identifying the robot 30.

The user database DB3 stores user information. The user information is personal information about a user who can use the present system 1 and includes a user ID for identifying the individual user (operator, viewer, etc.), user attribute information related to user attributes such as a user name, gender, age, family members, address, contact information, mail address, place of work, annual income, hobbies, preferences, and the like.

The operation authority database DB4 stores operation authority information. The operation authority information is information related to the operation authority of the robot 30. The operation authority information includes a robot ID for identifying the robot 30 to be operated, an operator ID for identifying a user (that is, an operator) having the operation authority of the robot 30, information defining a range (for example, an operation time, operation content, and the like; hereinafter, referred to as an operable range) in which the operator can perform an operation, etc. The operation authority information may be preset and fixed. Alternatively, the operation authority information may be settable and changeable as appropriate by the operator or the like.

The control unit 12 controls the reception of operation information on the robot in accordance with the operation authority information on the robot 30 set as described above. Specifically, when the control unit 12 receives operation information on the robot 30 from the operator terminal 20a or the like, the control unit 12 determines whether to permit the reception of the operation information by referring to the operation authority information. For example, when the control unit 12 determines that the operator of this operator terminal 20a does not have a valid operation authority based on a result of the comparison between the operation information and the operation authority information, the control unit 12 rejects the reception of the operation information. When the control unit 12 determines that the operator of this operator terminal 20a has a valid operation authority based on a result of the comparison between the operation information and the operation authority information, the control unit 12 permits the reception of the operation information.

The reception unit 13 receives various kinds of data transmitted from the robot 30 and the terminal 20 of each user (that is, the operator terminal 20a and the viewer terminals 20b). For example, the reception unit 13 receives distribution image data or personal image data acquired by the robot 30 and operation information on the robot 30 transmitted from the operator terminal 20a.

The transmission unit 14 transmits the operation information on the robot 30 received from the operator terminal 20a to the corresponding robot 30. In addition, the transmission unit (first transmission unit) 14 transmits, to the robot 30, a first image-capturing instruction by which the operator instructs to capture a distribution image. The transmission unit (first transmission unit) 14 also transmits, to the robot 30, a second instruction by which the individual user instructs to capture a personal image. Further, the transmission unit (second transmission unit) 14 transmits the personal image data acquired by the robot 30 to the terminal 20 of the specific user who has given the corresponding image-capturing instruction.

The distribution unit 15 live-streams the distribution image data acquired by the robot 30 to the terminal 20 of each user. The terminal 20 of each user displays the live-streamed image data on its display device.

### (Functional Configuration of Robot 30)

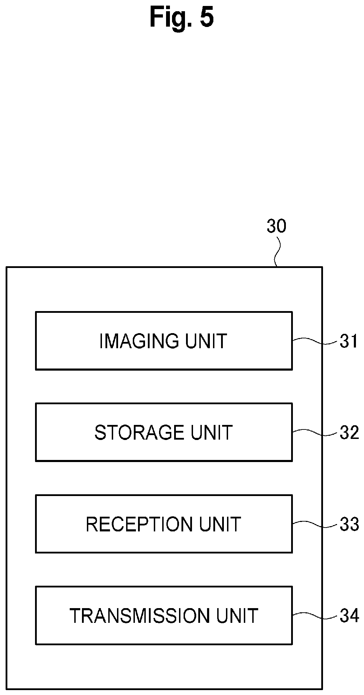

Fig. 5 is a block diagram illustrating a functional configuration of the robot 30.

The robot 30 includes an imaging unit 31, a storage unit 32, a reception unit 33, and a transmission unit 34 as main functional components. The functions of the robot 30 are realized by a processor of the robot 30 executing programs and the like stored in the storage unit 32.

The imaging unit 31 acquires image data on various objects (for example, exhibits, creatures, and the like) in the facility in accordance with an operation instruction from the user.

The storage unit 32 stores various kinds of data and programs and also stores distribution image data, personal image data, etc. acquired by the cameras C1 and C2.

The reception unit 33 receives various kinds of data transmitted from the management server 10 and the terminals 20 of the users (that is, the operator terminal 20a and the viewer terminals 20b). For example, the reception unit 33 receives operation information on the robot 30 transmitted from the operator terminal 20a, etc.

The transmission unit 34 transmits the personal image data acquired by the robot 30 to the terminal 20 of the specific user who has given the corresponding image-capturing instruction via the management server 10.

(Physical Configurations of Management Server 10, Operator Terminal 20a, and Viewer Terminal 20b)

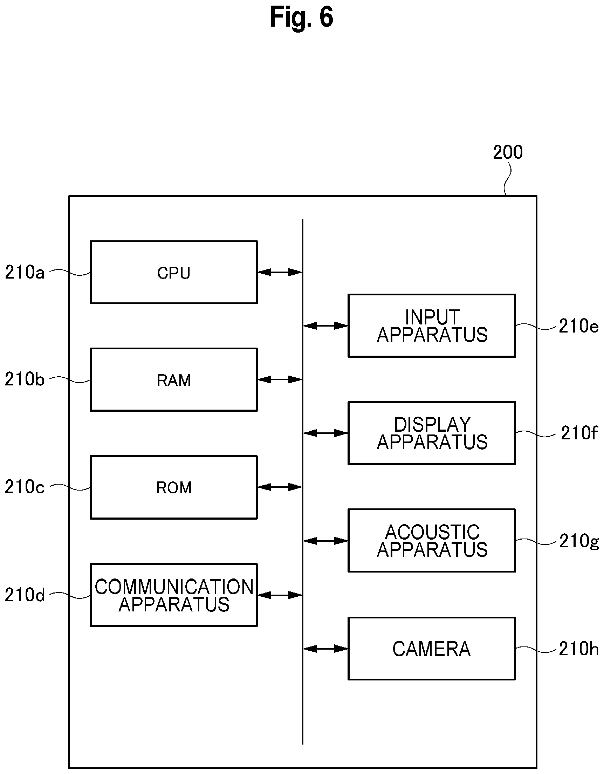

Fig. 6 is a diagram illustrating a hardware configuration of a computer (information processing apparatus) 200 mounted on each of the management server 10, the operator terminal 20a, and the viewer terminal 20b.

The computer 200 includes a central processing unit (CPU) 210a corresponding to a computation unit, a random access memory (RAM) 210b corresponding to a storage unit, a read-only memory (ROM) 210c corresponding to a storage unit, a communication device 210d, an input device 210e, a display device 210f, an audio device 210g, and a camera 210h. These components are connected to each other via a bus so as to be able to transmit and receive data. While the present example describes a case where the computer 200 is constituted by a single computer, the computer 200 may be realized by combining a plurality of computers. The configuration illustrated in Fig. 6 is an example, and the computer 200 may have a configuration other than that illustrated in Fig. 6 or may be configured without a part of the configuration illustrated in Fig. 6.

The CPU 210a is a control unit that controls execution of programs stored in the RAM 210b or the ROM 210c and performs data computation and processing. The CPU 210a is a computation unit that executes programs for live-streaming the image date by using the robot 30 and displaying the live-streamed image date. The CPU 210a receives various kinds of data from the input device 0e and the communication device 210d, displays a computation result of the data on the display device 210f, outputs sound from the audio device 210g, and stores the data in the RAM 210b.

The RAM 210b is a rewritable storage unit and may be constituted by, for example, a semiconductor storage element. The RAM 210b may store data such as various kinds of programs executed by the CPU 210a. Note that these are examples, and data other than the above-described data may be stored in the RAM 210b, or not all of the above-described data may be stored in the RAM 210b.

The ROM 210c is a readable storage unit and may be constituted by, for example, a semiconductor storage element. The ROM 210c may store, for example, non-rewritable programs and date.

The communication device 210d is an interface that connects the computer 200 to other devices via the communication network N.

The input device 210e receives data inputs and may include, for example, a keyboard and a touch panel. The input device 210e may include a microphone for sound input.

**The** display device 210f visually displays a computation result obtained by the CPU 210a and may be constituted by, for example, a liquid crystal display (LCD). The display device 210f may display the distribution image data, the personal image data, etc. acquired by the robot 30.

The audio device 210g is for outputting sound and may include, for example, an audio decoder and a speaker.

The camera 210h includes an image sensor that captures still images or moving images and transmits the captured still images, moving images, or the like to the display device 210f and the robot 30 as image data. The image data may include sound and the like.

### (Physical Configuration of Robot 30)

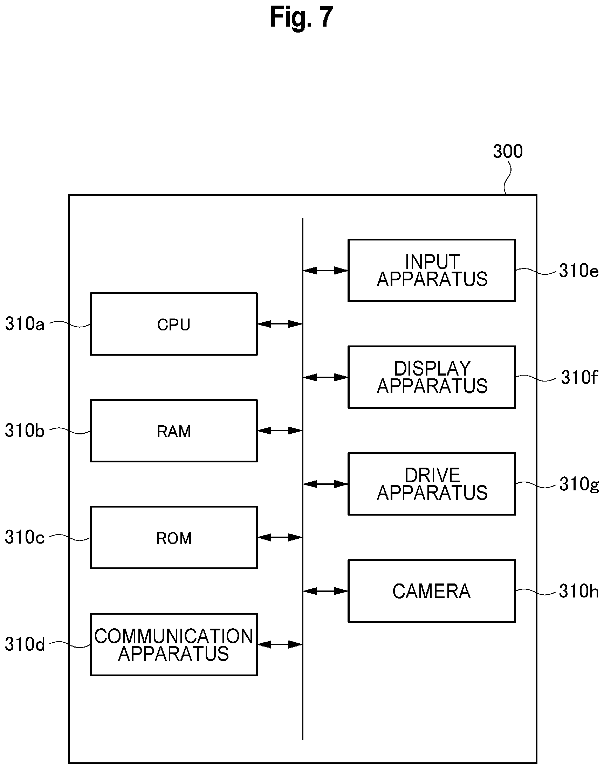

Fig. 7 is a diagram illustrating a hardware configuration of a computer (information processing apparatus) 300 mounted on the robot 30.

The computer 300 includes a CPU 310a corresponding to a computation unit, a RAM 310b corresponding to a storage unit, a ROM 310c corresponding to a storage unit, a communication device 310d, an input device 310e, a display device 310f, a driving device 310g, and a camera 310h. These components are connected to each other via a bus so as to be able to transmit and receive data. Note that the configuration illustrated in Fig. 7 is an example, and the computer 300 may have a configuration other than that illustrated in Fig. 7 or may be configured without a part of the configuration illustrated in Fig. 7.

The CPU 310a is a control unit that controls execution of programs stored in the RAM 310b or the ROM 310c and performs data computation and processing. The CPU 310a is a computation unit that executes a program for acquiring a moving image by using the robot 30. The CPU 310a receives various kinds of data from the input device 310e and the communication device 310d, displays a computation result of the data on the display device 310f, and stores the data in the RAM 310b. The CPU 310a controls the driving device 310g and controls the operation of the robot 30.

The RAM 310b is a rewritable storage unit and may be constituted by, for example, a semiconductor storage element. The RAM 310b may store various kinds of programs executed by the CPU 310a. Note that these are examples, and data other than the above-described data may be stored in the RAM 310b, or not all of the above-described data may be stored in the RAM 310b.

The ROM 310c is a readable storage unit and may be constituted by, for example, a semiconductor storage element. The ROM 310c may store, for example, non-rewritable programs and date.

The communication device 310d is an interface that connects the robot 30 to other devices via the communication network N.

**The** input device 310e receives data inputs and may include, for example, a keyboard and a touch panel. The input device 310e may include a microphone for sound input.

The display device 310f visually displays a computation result obtained by the CPU 310a and may be constituted by, for example, an LCD. The display device 310f may display a moving image or the like captured by a camera of the robot 30.

The driving device 310g includes an actuator that can be remotely operated and includes a mobile unit such as wheels, a manipulator, and the like. When the robot 30 is a mobile robot, the driving device 310g includes at least a mobile unit such as wheels and may also include a manipulator. When the robot 30 is a wearable robot, the driving device 310g includes at least a manipulator.

The camera 310h includes the first camera C1 for acquiring distribution image data in accordance with an operation instruction (first operation instruction) form the operator and the second camera C2 for acquiring personal image data in accordance with an operation instruction (second operation instruction) from the individual user. The camera 310h includes an image sensor that captures still images or moving images and transmits the captured still images, moving images, and the like to the display device 310f and the management server 10 as image data. The image data may include sound and the like.

### <Processing Flow>

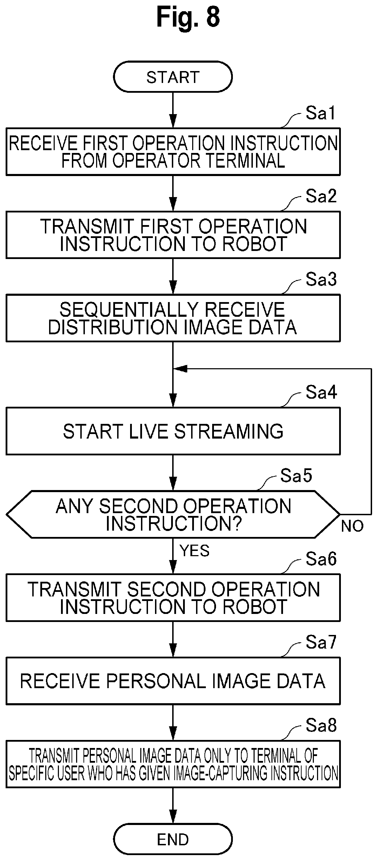

Fig. 8 is a flowchart illustrating an example of a process performed by the management server 10 according to the present embodiment. It is assumed that an operator X is authorized to remotely operate the robot 30 installed in the facility, and while the operator X is remotely operating the robot 30, a specific viewer Y acquires personal image data by using the robot 30.

In order to perform live streaming to show the viewers the inside of the facility, the operator X operates the operator terminal 20a to start a remote-control operation of the robot 30. When receiving the operation by the operator X, the operator terminal 20a transmits operation information including the operator ID and the like to the management server 10. The operation information transmitted to the management server 10 includes an instruction by which the operator X acquires distribution image data (that is, the first operation instruction).

When receiving the operation information including the first operation instruction form the operator terminal 20a (step Sa1), the management server 10 transmits the received operation information to the robot 30 (step Sa2).

When receiving the operation information from the management server 10, the robot 30 starts acquisition of the distribution image data by the first camera C1 in accordance with the first operation instruction included in the operation information. Next, the robot 30 sequentially transmits the acquired distribution image data to the management server 10.

When having sequentially received the distribution image data acquired by the robot 30 (step Sa3), the management server 10 stores the distribution image date in the distribution image database DB1 and starts live streaming by transmitting the distribution image data to the terminal 20 of each user (the operator terminal 20a and the viewer terminals 20b) (step Sa4). Each user starts viewing a live image or the like by using the own terminal 20.

After starting the live streaming, the management server 10 starts determining whether any of the users has given a second operation instruction (step Sa5). If the management server 10 receives no second operation instruction (No in step Sa5), the process returns to step Sa4, and the live streaming is continued.

On the other hand, if, for example, the viewer Y inputs an instruction to acquire personal image data (that is, the second operation instruction) and the management server 10 receives the second operation instruction from the viewer terminal 20b of the viewer Y (YES in step Sa5), the management server 10 transmits the received second operation instruction to the robot 30 (step Sa6).

When receiving the second operation instruction from the viewer Y from the management server 10, the robot 30 starts acquisition of personal image data by the second camera C2 in accordance with the second operation instruction. The robot 30 sequentially transmits the acquired personal image data to the management server 10.

When receiving the personal image data acquired by the robot 30 (step Sa7), the management server 10 transmits the personal image data only to the terminal 20 of the specific user (in this example, the viewer terminal 20b of the viewer Y) who has given the corresponding image-capturing instruction (step Sa8).

**As** a result, not only the live image P11 but also the pinpoint image P12, for which the viewer Y has given an image-capturing instruction, is displayed on the viewer terminal 20b of the viewer Y (see Fig. 3). In this way, the users can enjoy live experiences that offer the users a sense of being present as if the users were actually in the facility.

In addition, the user can edit a pinpoint image P12 or the like (that is, personal image data) that the user has used the robot 30 to capture and create original content. For example, the user (in this example, the viewer Y) who has obtained the personal image data later accesses the management server 10 by using the own terminal 20. The viewer Y selects the personal image data, which the viewer Y has obtained by giving the image-capturing instruction, and gives an instruction to perform various kinds of editing (insertion of subtitles, comments, sound effects, advertisements, and the like). When performing editing, the viewer Y may perform various kinds of editing by appropriately combining not only the personal image data but also the distribution image data. The management server (editing unit) 10 generates original content by editing the personal image data, etc. based on an instruction from the viewer Y and presents the generated original content on the viewer terminal 20b of the viewer Y. Later, the viewer Y shares the generated original content with various groups and people (for example, friends and family) by using, for example, a social networking service (SNS).

According to the configuration described above, the user can share his/her impression obtained through the live experience with some other people by generating original content based on the personal image data obtained by the user. The original content may be automatically generated by the management server 10. Specifically, the management server 10 may automatically edit the personal image data selected by the user (for example, insertion of sound effects) to generate original content. The original content may be provided at no charge or at a charge depending on the presence or absence of an advertisement.

### B. Modifications

### <Modification 1>

In the embodiment described above, when a personal image is captured by using the second camera C2, the personal image data is transmitted only to the terminal 20 of the user who has given the corresponding image-capturing instruction (second operation instruction). However, the present invention is not limited to the above configuration. For example, the user who has given the second operation instruction may set a destination to which the personal image data is transmitted. All users may be allowed to set the transmission destination, or alternatively, only the operator having the operation authority of the robot 30 may be allowed to set the transmission destination. In other words, the viewer who does not have the operation authority of the robot 30 may not be allowed to freely set the transmission destination. The timing of setting the transmission destination is not limited to the timing after the second operation instruction is given. The transmission destination may be set before the second operation instruction is given.

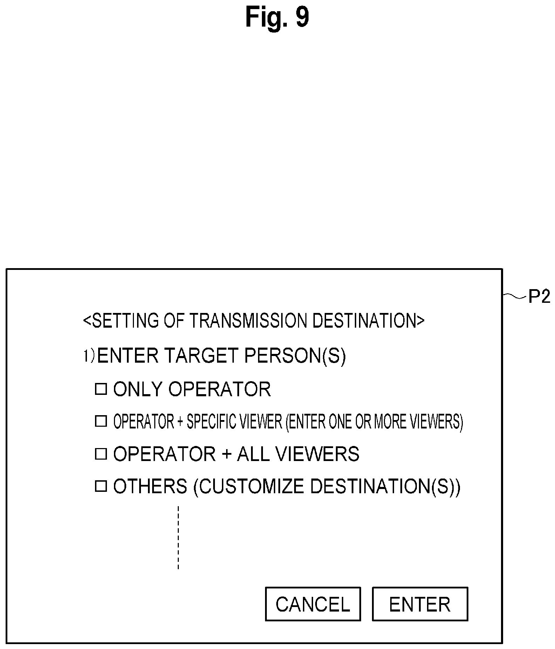

Fig. 9 is a diagram illustrating an example of a transmission destination setting screen P2 displayed on the operator terminal 20a when the operator has given the second operation instruction.

The operator performs an input operation on the operator terminal 20a to set a specific viewer (among viewers A1 to A5, for example) as a transmission destination. When the management server (first reception unit) 10 receives the setting of transmission destination of the personal image data from the operator terminal 20a, the management server 10 reads the user information (mail address, etc.) about the transmission destination from the storage unit 11. Thereafter, when the management server (transmission unit) 10 receives, from the robot 30, the personal image data obtained by the operator, the management server (transmission unit) 10 transmits the personal image data obtained by the operator to the set transmission destination.

According to the configuration described above, the operator can promote active communication by sharing the obtained personal image data (for example, an enlarged photograph of a valuable exhibit) with the specific viewer in real time. Note that, while the specific viewer is set as the transmission destination in the above example, a person other than the viewer (for example, a family member or a friend) may be set as the transmission destination.

### <Modification 2>

The acquisition of personal image data may be restricted. For example, in a specific facility such as an art museum or a museum, there is a case where some restrictions are placed on image capturing, for example, there is an area where photography is prohibited. In particular, since not only the operator but also the viewer can operate the personal image capturing, there is a concern that, if there is no restriction on image capturing, personal image capturing may be performed in a place where photography is prohibited, for example. In order to prevent such a problem, for example, the operator having the operation authority of the robot 30 may set image-capturing restriction information for restricting the acquisition of personal image data.

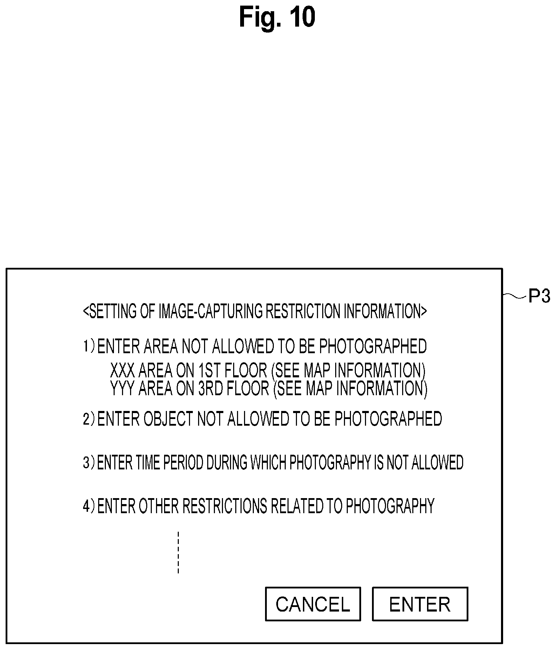

Fig. 10 is a diagram illustrating an example of an image-capturing restriction setting screen P3 displayed on the operator terminal 20a.

In the example illustrated in Fig. 10, the area not allowed to be photographed, the object (valuable exhibit, etc.) not allowed to be photographed, the time period during which photography is not allowed, and the like can be set as image-capturing restriction information so as to prohibit acquisition of personal image data. Further, instead of completely prohibiting image capturing, image capturing in a specific mode may be restricted, for example, flash photography may be prohibited.

The operator performs an input operation on the operator terminal 20a to set the image-capturing restriction information described above. When the management server (second reception unit) 10 receives the setting of image-capturing restriction information from the operator terminal 20a, the management server (second reception unit) 10 stores the received setting in the storage unit 11. Thereafter, when the management server (transmission unit, determination unit) 10 receives an instruction to acquire personal image data from any one of the users, the management server (transmission unit, determination unit) 10 determines whether to permit the personal image capturing (that is, a second image-capturing instruction) based on sensing information about the robot 30 and the image-capturing restriction information. The sensing information about the robot 30 is, for example, position information, time information, image information, and the like about the robot 30, and these pieces of information are acquired by various sensors (a GPS sensor, a timer, a camera, and the like) mounted on the robot 30.

For example, when the image capturing is permitted because the robot 30 is not in the area where photography is prohibited, the management server (notification unit) 10 notifies the robot 30 of the second image-capturing instruction. The robot 30 starts acquisition of personal image data by the second camera C2 in response to the second image-capturing instruction transmitted from the management server 10. The subsequent operation is the same as that in the present embodiment, and thus, description thereof will be omitted.

While the above example has described the case where the operator sets the image-capturing restriction information, the present invention is not limited thereto. For example, the image-capturing restriction information may be set by a manager of the facility, a system operator, or the like. Further, the image-capturing restriction information may be registered in a predetermined website, and the robot 30 may appropriately access the website and download the image-capturing restriction information.

### <Modification 3>

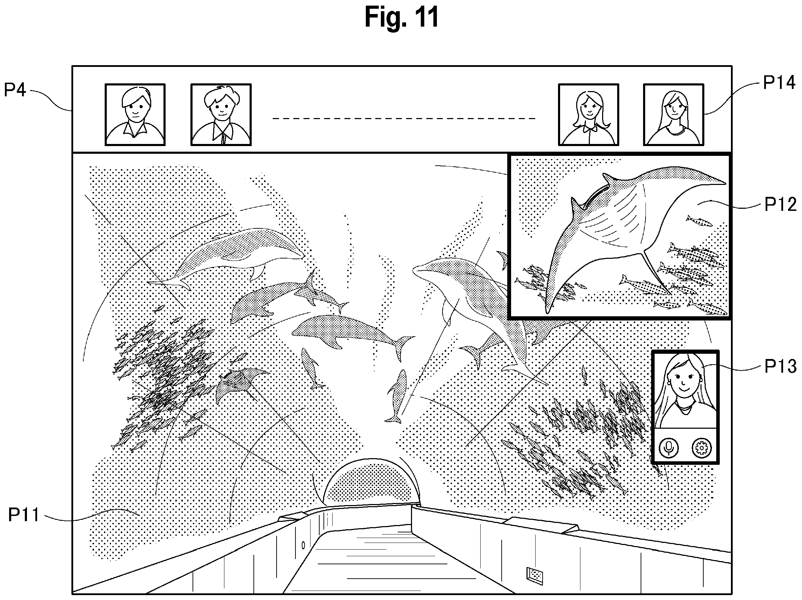

Fig. 11 is a diagram illustrating an example of a live screen P4 displayed on the terminal 20 of each user according to Modification 3.

The live screen P4 displays not only a live image P11 based on distribution image data and a pinpoint image P12 based on personal image data but also a face image P13 of the operator acquired by the operator terminal 20a, face images P14 of the viewers who have made a predetermined amount of social tipping or more, for example. By displaying such a live screen on the terminal 20 of each user in real time, the viewers can enjoy live experiences that offer the viewers a sense of being there.

### C. Others

The present embodiment and the modifications described above are intended to facilitate understanding of the present invention and are not intended to be construed as limiting the present invention. The elements, and the arrangement, materials, conditions, shapes, sizes, and the like thereof are not limited to those described as examples and can be appropriately changed. In addition, the elements may be partially replaced or combined.

Furthermore, in the present embodiment and the modifications, the "unit" or the "device" does not simply mean a physical unit and includes a case where a function of the "unit" or the "device" is realized by software. In addition, a function of a single "unit" or "device" may be realized by two or more physical units or devices, or functions of two or more "units" or "devices" may be realized by a single physical unit or device.

### Reference Signs List

- 1: Distribution system
- 10: Management server
- 11: Storage unit
- 12: Control unit
- 13: Reception unit
- 14: Transmission unit
- 15: Distribution unit
- 20a: Operator terminal
- 20b: Viewer terminal
- 30: Robot
- 31: Imaging unit
- 32: Storage unit
- 33: Reception unit
- 34: Transmission unit
- DB1: Distribution image database
- DB2: Personal image database
- DB3: User database
- DB4: Operation authority database

## Claims

1. A distribution system comprising: a robot that operates based on operation information received via a communication network; and a server apparatus that controls an operation of the robot, wherein
the robot includes:
an imaging unit that includes a first camera which acquires distribution image data in accordance with a first image-capturing instruction from an operator and a second camera which acquires personal image data in accordance with a second image-capturing instruction from a user, who is the operator or a viewer; and
a transmission unit that transmits the distribution image data and the personal image data to the server apparatus, and
the server apparatus includes:
a distribution unit that distributes the distribution image data to a terminal of the user; and
a transmission unit that transmits the personal image data to the terminal of the user who gives the second image-capturing instruction.

2. The distribution system according to claim 1, wherein the server apparatus further includes an editing unit that edits the personal image data in accordance with an instruction from the user who gives the second image-capturing instruction.

3. The distribution system according to claim 1 or 2, wherein
the server apparatus further includes a first reception unit that receives a setting of a transmission destination of the personal image data from the user who gives the second image-capturing instruction, and
the transmission unit transmits the personal image data to the set transmission destination.

4. The distribution system according to claim 3, wherein
when the user who gives the second image-capturing instruction is the operator, the first reception unit receives the setting of a transmission destination of the personal image data, and
the transmission destination includes a user other than the operator.

5. The distribution system according to claim 4, wherein
the server apparatus further includes:
a second reception unit that receives a setting of image-capturing restriction information for restricting acquisition of the personal image data; and
a determination unit that determines whether to permit the second image-capturing instruction, based on the image-capturing restriction information, and
the transmission unit transmits the permitted second image-capturing instruction to the robot.

6. A control method of a distribution system including a robot that operates based on operation information received via a communication network and a server apparatus that controls an operation of the robot, the method comprising: by the robot:
acquiring distribution image data in accordance with a first image-capturing instruction from an operator;
acquiring personal image data in accordance with a second image-capturing instruction from a user, who is the operator or a viewer; and
transmits the distribution image data and the personal image data to the server apparatus, and by the server apparatus:
distributing the distribution image data to a terminal of the user; and
transmitting the personal image data to the terminal of the user who gives the second image-capturing instruction.

7. A server apparatus for controlling a robot that operates, based on operation information received via a communication network, the server apparatus comprising:
a first transmission unit that transmits, to the robot, a first image-capturing instruction by which an operator instructs to capture a distribution image and transmits, to the robot, a second image-capturing instruction by which a user, who is the operator or a viewer, instructs to capture a personal image;
a reception unit that receives, from the robot, distribution image data corresponding to the first image-capturing instruction and personal image data corresponding to the second image-capturing instruction;
a distribution unit that distributes the distribution image data to the terminal of each user; and
a second transmission unit that transmits the personal image data to a terminal of the user who gives the second image-capturing instruction.
